# FASCICULE DE BREVET EUROPEEN

(11) **EP 2 064 077 B1**
(45) Date de publication et mention de la délivrance du brevet: **30.03.2016**
(21) Numéro de dépôt: 07823841.7
(22) Date de dépôt: 17.09.2007
(51) Int. Cl.: B60C 27/18, D04B 21/12

(54) **CHAINE D'ADHERENCE EN MATIERE TEXTILE POUR ROUE DE VEHICULE AUTOMOBILE**
TEXTILE SCHNEEKETTE FÜR FAHRZEUGREIFEN
ADHESION CHAIN FOR THE WHEEL OF AN AUTOMOTIVE VEHICLE

(30) Priorité: 20.09.2006 FR 0653832
(43) Date de publication de la demande: 03.06.2009
(73) Titulaire: Joubert Productions, 63600 Ambert (FR); COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: JOUBERT, Xavier, 63600 Ambert (FR); JOUBERT, Bernard, 63600 Ambert (FR); JARA, Adam, 63100 Clermont-Ferrand (FR); PERRIN, Frédéric, 63110 Beaumont (FR)
(74) Mandataire: Dequire, Philippe Jean-Marie Denis
(86) Numéro de dépôt international: PCT/FR2007/051946
(87) Numéro de publication internationale: WO 2008/035000

(56) Documents cités:
- DE-A1- 1 605 718
- FR-A1- 2 249 782
- US-A- 2 341 316

## Description

### DOMAINE TECHNIQUE

L'invention concerne un dispositif propre à conférer l'adhérence pour une roue d'un véhicule automobile, notamment sur la neige. Un tel dispositif est classiquement dénommé "chaîne" en raison du fait que les différents dispositifs remplissant cette fonction, connus à ce jour, se présentent sous la forme de chaînes, le plus souvent métalliques, terme devenu de fait générique.

### ETAT ANTERIEUR DE LA TECHNIQUE

Les problèmes majeurs auxquels sont confrontés les utilisateurs de telles chaînes résident d'une part, dans leur pose sur les roues du véhicule en question et d'autre part, dans le poids relativement important des chaînes métalliques.

Leur pose s'effectue, en raison même de la destination d'un tel produit, dans des conditions généralement difficiles, puisque l'utilisateur attend traditionnellement le dernier moment, c'est-à-dire lorsqu'il n'a plus d'adhérence, pour procéder à leur mise en place, donc dans une épaisseur de neige souvent conséquente. Au surplus, la mise en place de ces chaînes s'avère laborieuse, puisqu'il convient d'assurer le positionnement correct des moyens d'adhérence qu'elles définissent au niveau de la bande de roulement des roues en question, outre leur assujettissement correct à ce niveau, pour éviter lors de la rotation de la roue, l'escamotage intempestif des chaînes, ainsi que les bruits parasites qu'il ne manque pas de se produire.

Afin de s'affranchir de ces inconvénients, on a proposé, par exemple dans le document WO 00/59745 des chaînes du type en question, comportant une ceinture réalisée essentiellement en un matériau textile et propre à entourer la bande de roulement de la roue considérée. Cette ceinture textile est maintenue en place au moyen de parties latérales intérieure et extérieure souples. Dans ce document, la bande de roulement est constituée d'un treillis constitué de PVC revêtu d'un polyester et même de caoutchouc ou de polyuréthanne afin de conférer la résistance nécessaire au matériau textile mis en oeuvre.

Cependant, bien que présentant un gain de poids non négligeable par rapport aux chaînes traditionnelles, ces chaînes s'accompagnent corollairement d'une complexification du processus de réalisation affectant son coût de production.

On a également décrit dans le document FR 2 249 782 une chaîne d'adhérence constituée d'un filet, dont les cordons sont réticulés entre eux. On se heurte à des difficultés de réalisation en raison de l'étape de réticulation.

### BREVE DESCRIPTION DE L'INVENTION

L'objet de la présente invention est de proposer des chaînes dites "textile" s'affranchissant des inconvénients de l'art antérieur, et susceptible en outre de présenter une résistance accrue à l'usure.

Cette chaîne d'adhérence pour roue de véhicule automobile comprend une bande d'adhérence destinée à venir au contact, au moins de la bande de roulement de la roue considérée, et maintenue en place au moyen de câbles tendeurs, respectivement externe et interne.
Selon l'invention, la bande d'adhérence est constituée d'un filet réalisé en matière textile, ledit filet étant réalisé par tricotage de cordons réalisés eux-mêmes par tricotage, de telle sorte à définir les mailles dudit filet, lesdits cordons intégrant une âme de renfort, réalisée en un matériau à haut module.

En d'autres termes, l'invention consiste à réaliser pour la bande d'adhérence des chaînes en question, un filet à base de cordons, notamment réalisés en polyester, en polyamide ou en un polymère à base de polyamide par tricotage, et venant emprisonner une âme de renfort en aramide, et à assembler de tels fils ou cordons également par tricotage, de telle sorte à définir des mailles, notamment de forme losange ou carré de 40 x 40 mm, propres à définir la bande d'adhérence.

Par matériau à haut module, on entend un matériau présentant une ténacité ou contrainte à la rupture supérieure à 150 cN/tex et/ou un module initial supérieur à 1000cN/tex.

On relève en effet que si l'on met en oeuvre une âme de renfort présentant une ténacité inférieure à cette valeur, l'effet technique obtenu n'est pas significatif, de sorte que l'intégration d'une telle âme perd de son intérêt.

Par « module initial », on entend dans la présente description le module en extension à basse déformation des constituants de l'âme de renfort. Ce module initial est défini comme étant la pente de la partie linéaire de la courbe force / allongement de l'âme, mesurée juste après une prétension standard de 0,5 cN/tex.

Le module initial ainsi que les propriétés mécaniques en extension mentionnés dans la présente demande (notamment ténacité, allongement à la rupture notamment), sont mesurés de manière connue au moyen de mesures de type force (daN) / allongement (%), réalisées au moyen d'une machine « INSTRON » avec pinces « 4D », et en utilisant les paramètres opératoires suivants :
▪ longueur de traction : 400 mm
▪ vitesse de traction : 200 mm/mn
▪ prétension standard : 0,5 cN/tex

S'agissant des unités utilisées, il convient de rappeler :
▪ que le tex est une unité de titrage : poids en g de 1000 m de filé, étant rappelé que 0,111 tex = 1 denier ;
▪ que la ténacité s'exprime usuellement en matière textile en cN/tex, étant rappelé que 1 cN/tex = 0,11 g/denier.

Avantageusement, on choisit comme matériau l'aramide.

Les cordons constitutifs du filet sont réalisés comme déjà dit par tricotage, de telle sorte à ce que leur enveloppe externe présente une épaisseur moyenne typiquement comprise entre 3 et 7 mm. Par épaisseur, on entend la plus petite dimension transversale de sa section droite, lorsque celle-ci n'est pas circulaire.

Ces cordons sont réalisés en polyester ou en polyamide 6 ou en polyamide 66.

Selon l'invention, le filet constitutif de la bande d'adhérence est fermé au moyen d'une sangle de fermeture, également dénommée bande de jonction.

En outre, le bord interne du filet, destiné à venir se positionner au niveau de la face interne de la roue, est muni d'un câble - tendeur élastique, susceptible de présenter une capacité à l'allongement voisine de 120 %. Il présente avantageusement une résistance à la rupture supérieure à 55 daN.

Parallèlement, le bord externe du filet, destiné à venir se positionner au niveau de la face externe de la roue, est muni d'un câble ou cordon rigide, donc non élastique, destiné à bloquer le filet une fois en place sur la roue. Le câble mis en oeuvre présente idéalement un allongement nul sous faible charge, et en tout cas, limité à 1% sous une traction de 10 daN, et de 10% sous une traction de 100 daN.

La fonction de blocage que ce câble est destiné à remplir, est en outre susceptible d'être doublée au moyen de sangles diamétrales croisées, dont le nombre (2 à 4) est fonction des dimensions de la roue. Avantageusement, ces sangles sont solidarisées entre elles au niveau de leur lieu de croisement, facilitant ainsi le centrage de la chaîne par rapport à la roue lors du montage.

Selon cette configuration, on définit en fait une gamme de chaînes, dont les tailles varient aux fins de permettre leur adaptation aux différentes tailles de pneumatiques disponibles sur le marché. Il est cependant précisé qu'il correspond plusieurs tailles de pneumatiques pour une taille de chaîne considérée, jouant pour ce faire sur l'élasticité du câble - tendeur interne.

Selon une caractéristique de l'invention, les zones de jonction des cordons définissant les mailles du filet constitutif de la chaîne sont obtenues par tricotage, et ne mettent en oeuvre que les éléments constitutifs du tricot à l'exclusion de l'âme de renfort.

Ce faisant, on évite tout d'abord les phénomènes de cisaillement, susceptibles d'intervenir entre lesdites âmes de renfort, et corollairement, une usure prématurée de celles-ci.

D'autre part, on évite également les surépaisseurs au niveau de ces zones de jonction, améliorant ainsi les fonctions d'adhérence de la chaîne, et favorisant le confort général du véhicule.

Avantageusement, l'âme de renfort de l'invention n'est présente que sensiblement au niveau de la zone du filet destinée à venir en contact avec la bande de roulement du pneumatique considéré. En d'autres termes, ledit filet est exempt de cette âme de renfort au niveau de ses zones destinées à être rabattues sur les flancs du pneumatique considéré. Ce faisant, on facilite ainsi le montage du filet sur ledit pneumatique, car l'on gagne un peu en souplesse. Par ailleurs, le centrage dudit filet sur le pneumatique, qui se réalise de manière automatique dès que le véhicule progresse, est facilité, favorisant ainsi le positionnement correct de la chaîne sur ledit pneumatique, et diminuant corollairement les risques d'escamotage intempestif de la chaîne hors de la roue considérée. Par ailleurs, on diminue le coût de fabrication du filet.

Selon une autre caractéristique avantageuse de l'invention, le filet comporte au niveau des différentes intersections des cordons qui définissent les mailles qui le constituent, et limitativement au niveau de la zone destinée à venir à l'aplomb de la bande de roulement du pneumatique, des agrafes ou clips, optimisant la jonction des cordons à ce niveau. Plus précisément, ces agrafes ou clips, rapportés à ce niveau après réalisation du filet, et donc destinées à venir en contact avec la chaussée, permettent de soulager les cordons constitutifs du filet, favorisant la pérennité de la chaîne.

Ces agrafes ou clips sont métalliques, ou sont réalisées en matière plastique ou thermoplastique.

Dans une version particulière avantageuse, ces agrafes ou clips sont composites, avec notamment un insert métallique partiellement recouvert d'un thermoplastique, la zone non recouverte étant dirigée en direction de l'extérieur du filet, et destinée à entrer en contact avec la chaussée, alors que le reste est recouvert de thermoplastique, limitant les phénomènes d'usure au contact avec les cordons constitutifs du filet. Ces agrafes ou clips optimisent en outre l'adhérence de la chaîne sur des surfaces gelées (glace, verglas).

Selon une autre caractéristique avantageuse de l'invention, les cordons constitutifs du filet sont enduits d'élastomère, et notamment de polyuréthane, de telle sorte à leur conférer une plus grande résistance au détricotage, outre une plus grande résistance à l'abrasion. Au surplus, la mise en oeuvre de cette imprégnation, favorise l'autocentrage du filet sur le pneumatique.

Selon une autre caractéristique avantageuse de l'invention, on rapporte sur l'extérieur de la bande d'adhérence de la chaîne, donc destiné à venir en contact avec la chaussée, une pluralité de bandes s'étendant transversalement par rapport à la direction privilégiée de progression de la roue sur laquelle est destinée à être fixée la chaîne, et munies sur leur surface externe d'aspérités ou de saillies, propres à favoriser l'adhérence de la roue sur la glace ou sur le verglas.

Ces bandes transversales sont réparties périodiquement ou non le long de la bande de roulement, et sont typiquement au nombre de 6 à 8.

### BREVE DESCRIPTION DES DESSINS

La manière dont l'invention peut être réalisée et les avantages qui en découlent ressortiront mieux des exemples de réalisation qui suivent donnés à titre indicatif et non limitatif à l'appui des figures annexées.

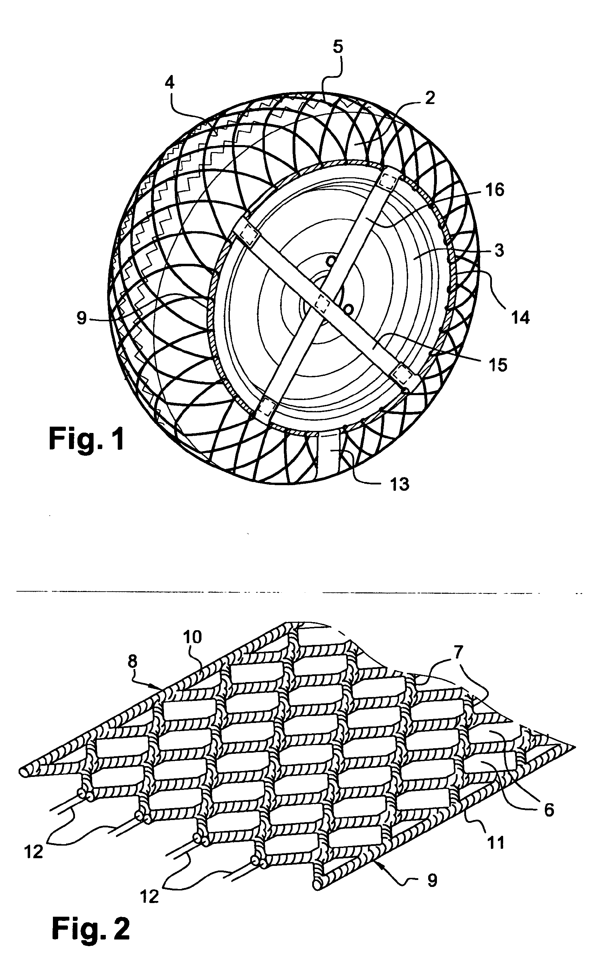

La figure 1 est une représentation schématique en perspective d'une roue munie d'une chaîne textile conforme à une première forme de réalisation de l'invention.
La figure 2 est une représentation schématique en section transversale partielle d'une forme particulière de réalisation du filet conforme à l'invention.
La figure 3 illustre un autre mode de réalisation de l'invention.
La figure 4 illustre un autre mode de réalisation de l'invention.

### DESCRIPTION DETAILLEE DE L'INVENTION

Dans le cadre de la présente invention, et en lien direct avec la description et les revendications, par convention, on désignera par face interne de la roue (1), la face au niveau de laquelle aboutit l'essieu ou le cardan, et la face externe (3) de la roue, celle directement visible sans manipulation quelconque, et susceptible de recevoir par exemple, un enjoliveur.

La chaîne d'adhérence conforme à l'invention comporte fondamentalement une bande d'adhérence (5), destinée à venir en contact intime avec la bande de roulement (4) du pneumatique dont est munie la roue que l'on souhaite équiper, outre des flancs (2) dudit pneumatique..

Selon l'invention, cette bande d'adhérence (5) est constituée d'un filet réalisé en matière textile, et définissant un certain nombre de mailles (6), lesdites mailles étant destinées à former autant de crampons, propres à assurer l'adhérence recherchée sur une surface glissante et relativement meuble, et notamment sur la neige.

En d'autres termes, les mailles ainsi définies forment saillies, dont la hauteur typique par rapport à la bande de roulement (4) du pneumatique est de l'ordre de 3 à 7 mm.

Ce filet est constitué par tricotage de cordons (7), eux-mêmes obtenus par tricotage. Selon une caractéristique de l'invention, l'opération de tricotage des cordons (7) et du filet (5) proprement dit est réalisée simultanément, par exemple sur des métiers à tricoter MULLER, et plus précisément sur une machine à tricoter à section carrée double fonture GWM ou sur une machine à tricoter à section ronde simple fonture RD3MT3.

Les cordons (7) sont réalisés comme déjà dit par tricotage, et comporte chacun plusieurs brins, et par exemple de 3 à 10, le diamètre souhaité du cordon étant obtenu par tricotage et serrage desdits brins entre eux.

Le nombre de brins est également fonction de la résistance mécanique recherchée desdits cordons. Ainsi, et selon une forme de réalisation de l'invention, les cordons sont constitués de deux torons de trois brins réalisés en polyester, et avantageusement en polyamide 66. Ce matériau présente l'avantage de combiner une résistance mécanique élevée, de bonnes propriétés d'adhérence, notamment sur la neige et surtout une résistance à l'abrasion également élevée.

Avantageusement, le polyamide mis en oeuvre est préalablement stabilisé, par traitement à chaud (typiquement à environ 120 °C), induisant une pré-rétractation.

Selon l'exemple de réalisation décrit, la densité du tricotage du filet est telle qu'hors toute âme de renfort, il présente une densité linéaire de 12,3 g/m.

En outre, et selon une caractéristique de l'invention, il est inséré lors de la réalisation des cordons, une âme (12) réalisée en un matériau à haut module, et typiquement en aramide, aux fins de conférer au filet une plus grande résistance mécanique et à l'abrasion.

Cet aramide présente une ténacité de 200 cN/tex. Ce matériau pourrait être substitué par le matériau commercialisé sous la marque déposée VECTRAN^{®}, ou encore par un polyéthylène, commercialisé sous la marque déposée DYNEEMA^{®}, ces deux matériaux présentant une ténacité respective de 230 cN/tex et de 180 cN/tex.

L'insertion de cette âme (12) au sein des cordons ne résulte donc que de l'opération de tricotage des cordons.

Selon une caractéristique de l'invention, les âmes respectives des cordons ne se croisent jamais, ni ne viennent en contact l'une de l'autre. On s'affranchit ainsi des phénomènes de cisaillement, et donc d'usure prématurée de ces matériaux, outre des surépaisseurs au niveau des zones de jonction des cordons, propres à définir les mailles.

Il est précisé que les cordons les plus externes du filet, respectivement (10) et (11) sont dépourvus d'une telle âme (12).

En outre, et avantageusement, les zones (17) et (18) du filet, c'est à dire les zones autres que celle (19) destinée à venir en contact avec la bande de roulement (4) du pneumatique, sont exemptes de l'âme (12). Ce faisant, on confère davantage de souplesse au filet, et corollairement, sa mise en place sur la roue s'en trouve facilitée. De plus, l'autocentrage du filet lors de sa pose, outre lors de la progression du véhicule s'en trouve également amélioré.

Les cordons en polyamide assurent donc une protection de l'âme de renfort contre les phénomènes d'abrasion et de blessures mécaniques, qui se révèle particulièrement intéressante, notamment lors des freinages d'urgence, où lesdits phénomènes d'abrasion sont intenses. Corollairement, l'âme de renfort, par exemple en aramide, confère à la structure une plus grande résistance à la rupture.

L'association originale des deux, selon l'invention, permet de disposer d'une chaîne souple, légère, qui néanmoins remplit sa fonction première d'adhérence, notamment dans la neige.

Lors de l'opération de tricotage, il est défini des mailles (6), dont les dimensions sont sensiblement standardisées (typiquement 40 x 40 mm), qui lorsque le filet en question est tendu sur la roue du véhicule automobile, présentent une forme carrée ou en losange, tel qu'on peut bien l'observer sur les différentes figures.

Le filet ainsi constitué est défini par deux bords latéraux (8, 9), respectivement interne (8) et externe (9), destinés à venir se rabattre de part et d'autre de la bande de roulement (4) de la roue considérée (1). Corollairement, ces bords latéraux sont sollicités pour assurer le positionnement et le maintien de la chaîne textile ainsi réalisée au niveau de ladite roue.

En outre, le filet est fermé au moyen d'une sangle (13) dite de fermeture ou bande de jonction, réalisée en polyester ou en polyamide. Cette sangle est fixée par soudure, couture etc.

Cette sangle peut être double, l'une s'étendant dessous le filet, et l'autre dessus, ces deux sangles étant alors cousues l'une à l'autre, en emprisonnant par couture les deux extrémités du filet. Elle peut être simple, et venir entourer le filet en s'étendant dessus et dessous, les deux brins ainsi définis étant également cousus l'un à l'autre, après emprisonnement et couture des deux extrémités du filet.

Les mailles du bord interne (8) du filet reçoivent un câble tendeur élastique (non représenté), dont les extrémités sont solidarisées au niveau de la bande ou sangle de fermeture (13) lors de la mise en place de cette dernière.

Ce câble - tendeur élastique est susceptible de présenter une capacité à l'allongement voisine de 120 %, propre à permettre le positionnement effectif de la chaîne nonobstant la fermeture de la bande d'adhérence (le filet (5)) qui la constitue, c'est à dire le recouvrement de la bande de roulement (4) de la roue considérée, outre le positionnement correct de la chaîne et sa tension suffisante pour lui permettre de remplir sa fonction.

Ce câble- tendeur élastique est par exemple constitué d'une âme en caoutchouc revêtue d'une gaine en polyester.

Parallèlement, le bord externe (9) du filet (5), destiné à venir se rabattre sur la face externe (2) de la roue est muni d'un câble ou cordon rigide (14), donc non élastique, destiné à bloquer le filet une fois en place sur la roue.

Ce câble rigide est par exemple constitué d'une âme en polyester, revêtue d'une gaine, également réalisée en polyester.

En raison de sa fonction de blocage, on confère à ce câble une capacité d'allongement proche de zéro.

Ce faisant, de par la mise en oeuvre d'un câble élastique et d'un câble rigide, on enfile littéralement le filet sur la roue, en jouant sur l'élasticité du câble - tendeur interne élastique.

Afin d'optimiser le blocage du filet sur la roue, on munit la chaîne de plusieurs sangles croisées (15, 16), dont le nombre (entre 2 et 4) est fonction des dimensions de la roue, et dont les extrémités sont solidarisées au niveau du bord externe (9) dudit filet. De plus, ces sangles sont solidarisées entre elles sensiblement en leur milieu, c'est à dire au niveau de lieu de croisement. Ces sangles croisées s'étendent donc au dessus de la face externe (3) de la roue.

On conçoit ce faisant, que l'on dispose d'une chaîne d'adhérence, venant plaquer de manière optimisée contre la bande de roulement (4) du pneumatique considéré. On évite ainsi que la chaîne ne se déchausse du pneumatique, et ce jusqu'à une vitesse relativement conséquente, et notamment supérieure à 50 km/h.

Avantageusement, on munit les zones d'intersection des cordons (7) définissant les mailles (6) d'agrafes ou clips (20). Ces agrafes ou clips (20) ne sont mis en place qu'au niveau de la zone (19) du filet, c'est à dire de la zone destinée à venir au contact de la bande de roulement du pneumatique.

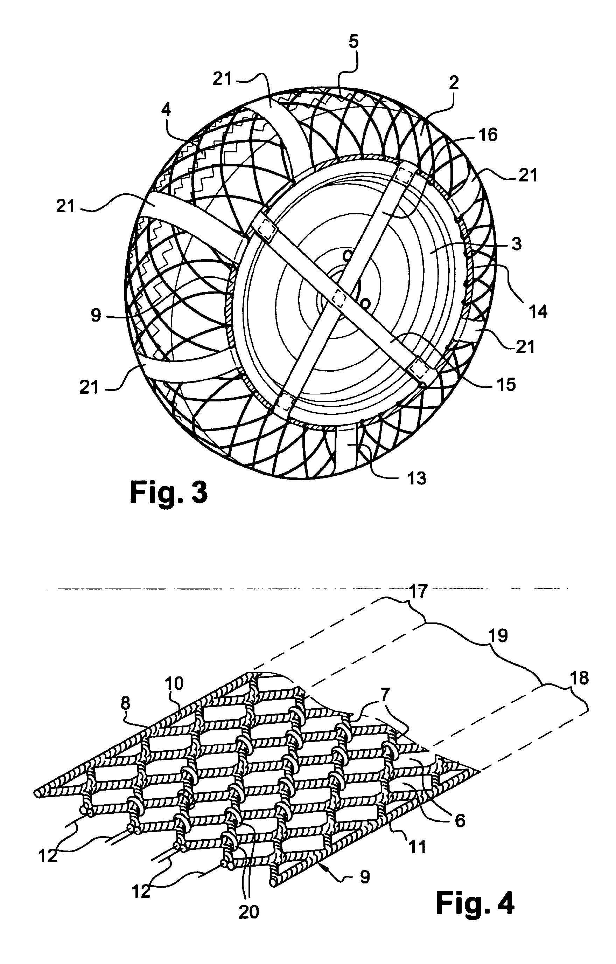

En outre, si au sein de la figure 4, les zones de jonction mixte, c'est à dire situées au niveau de la ligne de partage entre la zone (19) et les zones adjacentes (17) et (18) sont dépourvues de tels clips, on peut parfaitement concevoir qu'elles en soient munies.

Ces agrafes ou clips (20) optimisent tout d'abord la jonction des cordons (7) définissant les mailles, soulageant l'effort exercé sur le polyamide qui les constitue. De plus, étant destinés à venir en contact avec la chaussée en raison des saillies qu'ils définissent par rapport à l'enveloppe générale de la chaîne, ils favorisent l'adhérence notamment sur la glace ou sur le verglas.

Dans le même esprit, on rapporte sur la bande d'adhérence une pluralité (six à huit) de bandes de jonction (21) s'étendant entre les deux bords (10, 11) du filet, parallèlement à la bande de jonction (13) assurant la fermeture effective dudit filet.

Ces bandes sont fixées par tout moyen, et notamment par couture, et sont revêtues sur leur surface externe, c'est à dire sur la surface destinée à venir en contact avec la chaussée, de saillies de tout type, propres là encore, à optimiser l'adhérence de la roue considérée sur une surface gelée.

Selon une autre caractéristique avantageuse de l'invention, les cordons (7) constitutifs du filet sont enduits d'élastomère, et plus particulièrement de polyuréthane, de telle sorte à leur conférer une plus grande résistance au détricotage, outre une plus grande résistance à l'abrasion.

Cette opération d'enduction, par exemple réalisée au rouleau ou au spray, consécutivement à la mise en place des agrafes ou des clips, lorsque le filet en est muni.

De plus, cette enduction est réalisée au moyen d'un polyuréthane de très faible viscosité, typiquement inférieure à 20 centipoises, permettant une très bonne imprégnation des éléments constitutifs du filet. Le polyuréthane est choisi de telle sorte à polymériser à température ambiante ou quasiment à l'ambiante.

Avantageusement, l'élastomère, et notamment le polyuréthane n'est imprégné qu'au niveau de la face externe du filet, c'est à dire, la face destiné à venir en contact avec la chaussée. En effet, l'absence de ce matériau au niveau de la face interne du filet favorise l'autocentrage de ce dernier.

La mise en oeuvre d'un filet textile tricoté conformément à la présente invention, permet outre de conférer un gain de poids considérable, également de faciliter la mise en place de ces chaînes, et de conférer au pneumatique une adhérence optimisée sur des chaussées glissantes, notamment recouverte de neige ou de glace.

## Revendications

1. Chaîne d'adhérence pour roue (1) de véhicule automobile comprenant une bande d'adhérence (5) destinée à venir au contact au moins de la bande de roulement (4) de la roue considérée, et maintenue en place au moyen de câbles tendeurs, respectivement externe (14) et interne, ladite la bande d'adhérence étant constituée d'un filet réalisé en matière textile, ***caractérisée* en ce que** ledit filet (5) est constitués de cordons (7) réalisés par tricotage, lesdits cordons étant assemblés entre eux également par tricotage de telle sorte à définir les mailles (6) dudit filet, et **en ce que** les cordons (7) intègrent une âme de renfort (12) réalisée en un matériau à haut module.

2. Chaîne d'adhérence pour roue (1) de véhicule automobile selon la revendication *1,* ***caractérisée* en ce que** le matériau à haut module constitutif de l'âme de renfort (12) présente une ténacité ou résistance à la rupture supérieure à 150 cN/tex et/ou un module initial supérieur à 1000 cN/tex.

3. Chaîne d'adhérence pour roue (1) de véhicule automobile selon l'une des revendications 1 et 2, ***caractérisée* en ce que** le matériau à haut module constitutif de l'âme de renfort (12) est constitué par l'aramide.

4. Chaîne d'adhérence pour roue (1) de véhicule automobile selon l'une des revendications 1 à 3, ***caractérisée* en ce que** les zones de jonction des cordons (7) définissant les mailles du filet (5) sont obtenues par tricotage, et ne mettent en oeuvre que les éléments constitutifs du tricot à l'exclusion de l'âme de renfort.

5. Chaîne d'adhérence pour roue (1) de véhicule automobile selon l'une des revendications 1 à 4, ***caractérisée* en ce que** l'âme de renfort (12) n'est présente que sensiblement au niveau de la zone (19) du filet (5) destinée à venir en contact avec la bande de roulement (4) du pneumatique considéré.

6. Chaîne d'adhérence pour roue (1) de véhicule automobile selon l'une des revendications 1 à 5, ***caractérisée* en ce que** les cordons (7) constitutifs du filet (5) sont réalisés par tricotage de plusieurs brins, de telle sorte à ce que leur enveloppe externe présente une épaisseur moyenne typiquement comprise entre 3 et 7 mm.

7. Chaîne d'adhérence pour roue (1) de véhicule automobile selon l'une des revendications 1 à 6, ***caractérisée* en ce que** les cordons (7) constitutifs du filet (5) sont réalisés en polyester, en polyamide 6 ou en polyamide 66.

8. Chaîne d'adhérence pour roue (1) de véhicule automobile selon l'une des revendications 1 à 7, ***caractérisée :***
• **en ce que** le filet (5) constitutif de la bande d'adhérence est fermé au moyen d'une sangle de fermeture (13),
• **en ce que** le bord interne (8) dudit filet (5) destiné à venir se rabattre sur la face interne de la roue est muni d'un câble - tendeur élastique,
• et **en ce que** le bord externe (9) dudit filet (5), destiné à venir se rabattre sur la face externe de la roue est muni d'un câble ou cordon rigide (14), destiné à bloquer le filet une fois en place sur la roue.

9. Chaîne d'adhérence pour roue (1) de véhicule automobile selon la revendication *8,* ***caractérisée* en ce que** le câble - tendeur élastique présente une capacité à l'allongement voisine de 120 %.

10. Chaîne d'adhérence pour roue (1) de véhicule automobile selon l'une des revendications 8 et 9, ***caractérisée* en ce que** le câble - tendeur élastique présente une résistance à la rupture supérieure à 55 daN.

11. Chaîne d'adhérence pour roue (1) de véhicule automobile selon l'une des revendications 8 à 10, ***caractérisée* en ce qu'**aux fins d'optimiser le blocage du filet (5) sur la roue, on munit la chaîne de plusieurs sangles croisées (15, 16), dont les extrémités sont solidarisées au niveau du bord externe (9) dudit filet, et s'étendant au dessus de la face externe (3) de la roue.

12. Chaîne d'adhérence pour roue (1) de véhicule automobile selon la revendication 11, ***caractérisée* en ce que** les sangles (15, 16) sont solidarisées entre elles au niveau de leur lieu de croisement.

13. Chaîne d'adhérence pour roue (1) de véhicule automobile selon l'une des revendications 1 à 12, ***caractérisée* en ce que** le filet (5) comporte au niveau des différentes intersections des cordons (7) qui le définissent, situées sur la bande d'adhérence, et donc destinées à venir en contact avec la chaussée, des agrafes ou clips (20), destinés à optimiser la jonction des cordons à ce niveau.

14. Chaîne d'adhérence pour roue (1) de véhicule automobile selon la revendication 13, ***caractérisée* en ce que** les agrafes ou clips (20) sont métalliques, ou sont réalisées en matière plastique ou thermoplastique.

15. Chaîne d'adhérence pour roue (1) de véhicule automobile selon la revendication 13, ***caractérisée* en ce que** les agrafes ou clips (20) sont composites, avec notamment un insert métallique partiellement recouvert d'un thermoplastique, la zone non recouverte étant dirigée en direction de l'extérieur du filet, et destinée à entrer en contact avec la chaussée, alors que le reste est recouvert de thermoplastique.

16. Chaîne d'adhérence pour roue (1) de véhicule automobile selon l'une des revendications 1 à 15, ***caractérisée* en ce que** les cordons (7) constitutifs du filet (5) sont enduits d'élastomère et notamment de polyuréthane.

17. Chaîne d'adhérence pour roue (1) de véhicule automobile selon la revendication 16, ***caractérisée* en ce que** l'élastomère n'est imprégné qu'au niveau de la face externe du filet, c'est à dire, la face destiné à venir en contact avec la chaussée.

18. Chaîne d'adhérence pour roue (1) de véhicule automobile selon l'une des revendications 1 à 17, ***caractérisée* en ce qu'**une pluralité de bandes (21) s'étendant transversalement par rapport à la direction privilégiée de progression de la roue sur laquelle est destinée à être fixée la chaîne est rapportée sur l'extérieur de la bande d'adhérence de ladite chaîne, donc destinées à venir en contact avec la chaussée, lesdites bandes étant munies sur leur surface externe d'aspérités ou de saillies, propres à favoriser l'adhérence de la roue sur la glace ou sur le verglas.

## Patentansprüche

1. Schneekette für Fahrzeugreifen (1), die eine Haftfläche (5) aufweist, die dazu bestimmt ist, in Kontakt mit mindestens der Lauffläche (4) des betreffenden Rades zu kommen, und durch jeweils ein äußeres (14) und ein inneres Spannseil in Position gehalten wird, wobei die Haftfläche aus einem Netz, das aus textilem Material hergestellt ist, gebildet ist, **dadurch gekennzeichnet, dass** das Netz (5) aus Schnüren (7) gebildet ist, die durch Stricken hergestellt sind, wobei die Schnüre ebenfalls durch Stricken derart miteinander verbunden sind, um die Maschen (6) des Netzes zu definieren, und dass die Schnüre (7) einen Verstärkungskern (12) integrieren, der aus einem Material mit hohem Modul hergestellt ist.

2. Schneekette für Fahrzeugreifen (1) nach Anspruch 1, **dadurch gekennzeichnet, dass** das Material mit hohem Modul, das den Verstärkungskern (12) bildet, eine Zähigkeit oder Zerreißfestigkeit von mehr als 150 cN/tex und/oder ein Anfangsmodul von mehr als 1.000 cN/tex aufweist.

3. Schneekette für Fahrzeugreifen (1) nach einem der Ansprüche 1 und 2, **dadurch gekennzeichnet, dass** das Material mit hohem Modul, das den Verstärkungskern (12) bildet, aus Aramid gebildet ist.

4. Schneekette für Fahrzeugreifen (1) nach einem der Ansprüche 1 bis 3, **dadurch gekennzeichnet, dass** die Verbindungsbereiche der Schnüre (7), die die Maschen des Netzes (5) bilden, durch Stricken erhalten werden und nur die Bestandteile des Strickgewebes unter Ausschluss des Verstärkungskerns verwenden.

5. Schneekette für Fahrzeugreifen (1) nach einem der Ansprüche 1 bis 4, **dadurch gekennzeichnet, dass** der Verstärkungskern (12) nur im Wesentlichen an dem Bereich (19) des Netzes (5) vorhanden ist, der dazu bestimmt ist, in Kontakt mit der Lauffläche (4) des betreffenden Reifens zu kommen.

6. Schneekette für Fahrzeugreifen (1) nach einem der Ansprüche 1 bis 5, **dadurch gekennzeichnet, dass** die Schnüre (7), die die Maschen des Netzes (5) bilden, durch Stricken von mehreren Strängen derart hergestellt sind, dass ihre äußere Umhüllung eine durchschnittliche Dicke aufweist, die typischerweise zwischen 3 und 7 mm beträgt.

7. Schneekette für Fahrzeugreifen (1) nach einem der Ansprüche 1 bis 6, **dadurch gekennzeichnet, dass** die Schnüre (7), die das Netz (5) bilden, aus Polyester, aus Polyamid 6 oder aus Polyamid 66 hergestellt sind.

8. Schneekette für Fahrzeugreifen (1) nach einem der Ansprüche 1 bis 7, **dadurch gekennzeichnet:**
• **dass** das Netz (5), das die Haftfläche bildet, durch einen Verschlussgurt (13) verschlossen ist,
• **dass** der Innenrand (8) des Netzes (5), der dazu bestimmt ist, auf die Innenseite des Rades umgeklappt zu werden, mit einem elastischen Spannseil ausgestattet ist,
• und **dass** der Außenrand (9) des Netzes (5), der dazu bestimmt ist, auf die Außenseite des Rades umgeklappt zu werden, mit einem Kabel oder einer starren Schnur (14) ausgestattet ist, die dazu bestimmt ist, das Netz zu blockieren, sobald es auf dem Rad in Position ist.

9. Schneekette für Fahrzeugreifen (1) nach Anspruch 8, **dadurch gekennzeichnet, dass** das elastische Spannseil eine Fähigkeit zur Verlängerung von rund 120 % aufweist.

10. Schneekette für Fahrzeugreifen (1) nach einem der Ansprüche 8 und 9, **dadurch gekennzeichnet, dass** das elastische Spannseil eine Reißfestigkeit von mehr als 55 daN aufweist.

11. Schneekette für Fahrzeugreifen (1) nach einem der Ansprüche 8 bis 10, **dadurch gekennzeichnet, dass** für die Zwecke des Optimierens des Blockierens des Netzes (5) auf dem Rad die Kette mit mehreren gekreuzte Gurten (15, 16) ausgestattet wird, deren Enden an dem Außenrand (9) des Netzes fest verbunden sind, und die sich über der Außenseite (3) des Rades erstrecken.

12. Schneekette für Fahrzeugreifen (1) nach Anspruch 11, **dadurch gekennzeichnet, dass** die Gurte (15, 16) an ihrer Kreuzungsstelle miteinander fest verbunden sind.

13. Schneekette für Fahrzeugreifen (1) nach einem der Ansprüche 1 bis 12, **dadurch gekennzeichnet, dass** das Netz (5) an den verschiedenen Kreuzungen der Schnüre (7), die es definieren, die auf der Haftfläche angeordnet sind und folglich dazu bestimmt sind, mit der Fahrbahn in Kontakt zu kommen, Klammern oder Clips (20) aufweist, die dazu bestimmt sind, die Verbindung der Schnüre auf dieser Ebene zu optimieren.

14. Schneekette für Fahrzeugreifen (1) nach Anspruch 13, **dadurch gekennzeichnet, dass** die Klammern oder Clips (20) aus Metall sind oder aus Kunststoff oder Thermoplast hergestellt sind.

15. Schneekette für Fahrzeugreifen (1) nach Anspruch 13, **dadurch gekennzeichnet, dass** die Klammern oder Clips (20) zusammengesetzt sind, insbesondere mit einem metallischen Einsatz, der teilweise mit einem Thermoplast bedeckt ist, wobei der nicht bedeckte Bereich in Richtung der Außenseite des Netzes gerichtet ist und dazu bestimmt ist, mit der Fahrbahn in Kontakt zu kommen, während der Rest mit Thermoplast bedeckt ist.

16. Schneekette für Fahrzeugreifen (1) nach einem der Ansprüche 1 bis 15, **dadurch gekennzeichnet, dass** die Schnüre (7), die das Netz (5) bilden, mit einem Elastomer und insbesondere mit Polyurethan beschichtet sind.

17. Schneekette für Fahrzeugreifen (1) nach Anspruch 16, **dadurch gekennzeichnet, dass** das Elastomer nur an der Außenseite des Netzes, das heißt der Fläche, die dazu bestimmt ist, in Kontakt mit der Fahrbahn zu kommen, imprägniert ist.

18. Schneekette für Fahrzeugreifen (1) nach einem der Ansprüche 1 bis 17, **dadurch gekennzeichnet, dass** mehrere Streifen (21), die sich quer zu der bevorzugten Bewegungsrichtung des Rades erstrecken, auf dem die Kette bestimmt ist, befestigt zu werden, auf der Außenseite der Haftfläche der Kette aufgebracht sind, die folglich dazu bestimmt sind, in Kontakt mit der Fahrbahn zu kommen, wobei die Streifen auf ihrer Außenfläche mit Unebenheiten oder mit Vorsprüngen ausgestattet sind, die geeignet sind, die Haftung des Rades auf Eis oder Glatteis zu begünstigen.

## Claims

1. An adhesion chain for wheel (1) of a motor vehicle, comprising an adhesion tread (5) intended to be in contact with at least the tread (4) of the wheel concerned, and kept in place by means of respectively external (14) and internal tensioning cables, said adhesion tread consisting of a net made from textile material, ***characterized* in that** said net (5) consists of cords (7) prepared by knitting, said cords also being joined together by knitting so as to define the meshes (6) of said net, and **in that** the cords (7) include a reinforcing core (12) made from a high-modulus material.

2. The adhesion chain for wheel (1) of a motor vehicle as claimed in claim 1, ***characterized* in that** the high-modulus material constituting the reinforcing core (12) has a breaking tenacity or tensile strength above 150 cN/tex and/or an initial modulus above 1000 cN/tex.

3. The adhesion chain for wheel (1) of a motor vehicle as claimed in either of claims 1 and 2, ***characterized* in that** the high-modulus material constituting the reinforcing core (12) is made from aramid fiber.

4. The adhesion chain for wheel (1) of a motor vehicle as claimed in one of claims 1 to 3, ***characterized* in that** the junction zones of the cords (7) defining the meshes of the net (5) are obtained by knitting, and only make use of the elements constituting the knit to the exclusion of the reinforcing core.

5. The adhesion chain for wheel (1) of a motor vehicle as claimed in one of claims 1 to 4, ***characterized* in that** the reinforcing core (12) is only substantially present in the zone (19) of the net (5) intended to be in contact with the tread (4) of the tire concerned.

6. The adhesion chain for wheel (1) of a motor vehicle as claimed in one of claims 1 to 5, ***characterized* in that** the cords (7) constituting the net (5) are prepared by knitting of a plurality of strands, so that their outer envelope has a typical average thickness of between 3 and 7 mm.

7. The adhesion chain for wheel (1) of a motor vehicle as claimed in one of claims 1 to 6, ***characterized* in that** the cords (7) constituting the net (5) are prepared from polyester, polyamide 6 or polyamide 66.

8. The adhesion chain for wheel (1) of a motor vehicle as claimed in one of claims 1 to 7, ***characterized:***
• **in that** the net (5) constituting the adhesion tread is closed by means of a closure strap (13),
• **in that** the inside edge (8) of said net (5) intended to be folded back on the inside of the wheel is provided with an elastic tensioning cable,
• and **in that** the outer edge (9) of said net (5), intended to be folded back on the outside of the wheel is provided with a rigid cable or cord (14), intended to lock the net once in place on the wheel.

9. The adhesion chain for wheel (1) of a motor vehicle as claimed in claim 8, ***characterized* in that** the elastic tensioning cable has an elongation capacity close to 120%.

10. The adhesion chain for wheel (1) of a motor vehicle as claimed in either of 8 and *9,* ***characterized* in that** the elastic tensioning cable has a tensile strength above 55 daN.

11. The adhesion chain for wheel (1) of a motor vehicle as claimed in one of claims 8 to 10, ***characterized* in that** in order to optimise the locking of the net (5) on the wheel, the chain is provided with a plurality of crossed straps (15, 16), of which the ends are joined to the outer edge (9) of said net, and extend above the outside (3) of the wheel.

12. The adhesion chain for wheel (1) of a motor vehicle as claimed in claim 11, ***characterized* in that** the straps (15, 16) are joined together at their point of intersection.

13. The adhesion chain for wheel (1) of a motor vehicle as claimed in one of claims 1 to 12, ***characterized* in that** the net (5), at the various intersections of the cords (7) defining it, located on the adhesion tread, and therefore intended to be in contact with the carriageway, comprises clips (20), intended to optimize the junction of the cords at this level.

14. The adhesion chain for wheel (1) of a motor vehicle as claimed in claim 13, ***characterized* in that** the clips (20) are metallic, or are made from plastic or thermoplastic.

15. The adhesion chain for wheel (1) of a motor vehicle as claimed in claim 13, ***characterized* in that** the clips (20) are composite, with in particular a metal insert partially covered with a thermoplastic, the uncovered zone being directed toward the outside of the net, and intended to be in contact with the carriageway, whereas the remainder is covered with thermoplastic.

16. The adhesion chain for wheel (1) of a motor vehicle as claimed in one of claims 1 to 15, ***characterized* in that** the cords (7) constituting the net (5) are coated with elastomer and in particular with polyurethane.

17. The adhesion chain for wheel (1) of a motor vehicle as claimed in claim 16, ***characterized* in that** the elastomer is only impregnated at the outside of the net, that is, the side intended to be in contact with the carriageway.

18. The adhesion chain for wheel (1) of a motor vehicle as claimed in one of claims 1 to 17, ***characterized* in that** a plurality of strips (21) extending transversally to the privileged direction of movement of the wheel on which the chain is intended to be fastened, is added on to the outside of the adhesion tread of said chain, therefore intended to be contact with the carriageway, said strips being provided on their outer surface with nibs or lugs, suitable for promoting the adhesion of the wheel on ice.
